# EUROPEAN PATENT SPECIFICATION

(11) **EP 3 552 816 B1**
(45) Date of publication and mention of the grant of the patent: **19.03.2025**
(21) Application number: 19167840.8
(22) Date of filing: 08.04.2019
(51) Int. Cl.: B32B 5/02, B32B 5/26, B32B 7/12, B32B 27/12, B32B 3/06

(54) **MULTILAYER WRAP FOR BUNDLING OF CABLE AND BUNDLED CABLE**
MEHRSCHICHTIGE HÜLLE ZUM BÜNDELN VON KABELN UND GEBÜNDELTES KABEL
ENVELOPPE MULTICOUCHES POUR FAISCEAU DE CÂBLES ET CÂBLE GROUPÉ

(30) Priority: 13.04.2018 US 201815952370
(43) Date of publication of application: 16.10.2019
(73) Proprietor: tesa SE, 22848 Norderstedt (DE)
(72) Inventor: Oliver, Robert, Lowell, MI Michigan 49331 (US); Dibble, Brett, Huntington Woods, MI Michigan 48070 (US)
(74) Representative: tesa SE

(56) References cited:
- DE-A1- 10 042 732
- DE-U1- 202005 013 009
- US-A1- 2002 098 311
- US-A1- 2007 237 936
- US-A1- 2009 139 637
- US-A1- 2015 298 422

## Description

### FIELD OF THE DISCLOSURE

The present disclosure relates generally to wrap and tapes for bundling of cable, wires, cords and similar structures. More particularly, the disclosure relates to multilayer wrap and tapes for bundling of cable, wires and cords, along with bundled cable, for vehicular applications.

### BACKGROUND

In many industry segments, including the automotive industry, bundles of one or more wires, electrical lines, cords and other similar structures are wrapped either before installation or *in situ,* for packaging and space efficiency. That is, the wrap of these wires results in a smaller form factor as compared to a form factor of the wires without the wrap. Another function of such wrap for bundling of cable is to provide a protective function, e.g., abrasion and wear resistance. For example, in many applications, the wires bundled by the wrap are subjected to movement relative to one another (or other features within the structure housing them) from application-related motion and vibration that can lead to wear and deterioration. Another function of the wrap is to provide sound damping, particularly for wrap employed in vehicular and other applications that can result in significant motion of the wires bundled by the wrap.

Wrap and tapes with particular compositions and configurations are available with relatively high abrasion and wear resistance. These types of wrap can be employed in vehicular applications, such as within engine compartments that experience high levels of application-related motion and vibration. On the other hand, these conventional wrap and tapes typically suffer from low sound damping resistance.

Other wrap and tapes with certain compositions and configurations are available with relatively high sound damping and noise suppression. These types of wrap can also be employed in many vehicular applications, typically those in close proximity to occupants of the vehicle susceptible to noise associated with relative movement of components within the vehicle. Nevertheless, these conventional wrap and tapes generally suffer from relatively low abrasion and wear resistance.

Many vehicular applications, and other industrial applications, are such that wrap and tapes for bundling of wires, cable and the like are subjected to significant vibration and motion, which can lead to wear and unacceptable levels of vibration-induced noise. Accordingly, there is a need for wrap for bundling of cable with a combination of wear resistance and noise damping characteristics. There is also a need for low cost and efficient methods of making such wrap.
US 2015/298422 A1 discloses a highly abrasion-resistant technical adhesive tape, in particular an adhesive tape which can be rolled into an adhesive tape roll, preferably a cable winding tape, comprising a strip-shaped double-layer substrate with a pressure-sensitive adhesive coating on one side, a first textile layer composed of a fabric and a second textile layer composed of a fabric, the first and second textile layers being firmly connected to each other over the entire surface by an adhesive connection layer, wherein the fabric of the first textile layer and the fabric of the second textile layer each have a basis weight in the range from 50 g/m² to 300 g/m² , wherein the adhesive connection layer has a basis weight in the range from 50 g/m² to 300 g/m² , and wherein the adhesive tape has a thickness of at least 0.50 mm and at least one tape edge is shaped as a pattern deviating from a straight line, which is structured using a separating process.

### SUMMARY OF THE DISCLOSURE

According to some aspects of the present disclosure, a wrap for bundling cable is provided. The wrap comprises a multilayer wrap that comprises: (a) an outermost layer comprising a first polymer textile; (b) an innermost layer comprising a second polymer textile; and (c) an adhesive layer between the outermost and innermost layers. The first and second textiles differ from one another. Further, the multilayer wrap comprises an abrasion resistance that exceeds an abrasion resistance of the innermost and outermost layers alone, as measured under the ISO 6722 Standard. In addition, the multilayer wrap comprises a damping resistance of at least class B, as measured under the LV 312 Standard, wherein the first polymer textile of the outermost layer is a cloth comprising polyethylene terephthalate (PET), polyester, polyamide or a combination thereof, having a basis weight of 100 g/m² to 400 g/m² and a thickness of 150 µm to 350 µm, wherein the second polymer textile of the innermost layer is a fleece, having a basis weight of 50 g/m² to 250 g/m² and a thickness of 150 µm to 600 µm..

According to some aspects of the present disclosure, a wrap for bundling cable is provided. The wrap comprises a multilayer wrap that comprises: (a) an outermost layer comprising a first polymer textile; (b) an innermost layer comprising a second polymer textile; and (c) an adhesive layer between the outermost and innermost layers. The first and second textiles differ from one another. Further, the multilayer wrap comprises an abrasion resistance that exceeds an abrasion resistance of the innermost and outermost layers alone, as measured under the ISO 6722 Standard. The multilayer wrap comprises a damping resistance of at least class B, as measured under the LV 312 Standard, wherein the first polymer textile of the outermost layer is a cloth comprising polyethylene terephthalate (PET), polyester, polyamide or a combination thereof, having a basis weight of 100 g/m² to 400 g/m² and a thickness of 150 µm to 350 µm, wherein the second polymer textile of the innermost layer is a fleece, having a basis weight of 50 g/m² to 250 g/m² and a thickness of 150 µm to 600 µm. Further, a portion of the adhesive layer is in contact with the innermost layer and exposed adjacent to the outermost layer. In addition, the wrap is configured for longitudinal bundling of cable.

According to some aspects of the present disclosure, a bundled cable is provided. The cable comprises a plurality of cables; and a multilayer wrap arranged to bundle the plurality of cables. The wrap comprises: (a) an outermost layer comprising a first polymer textile; (b) an innermost layer comprising a second polymer textile; and (c) an adhesive layer between the outermost and innermost layers. The first and second textiles differ from one another. Further, the multilayer wrap comprises an abrasion resistance that exceeds an abrasion resistance of the innermost and outermost layers alone, as measured under the ISO 6722 Standard. The multilayer wrap comprises a damping resistance of at least class B, as measured under the LV 312 Standard, wherein the first polymer textile of the outermost layer is a cloth comprising polyethylene terephthalate (PET), polyester, polyamide or a combination thereof, having a basis weight of 100 g/m² to 400 g/m² and a thickness of 150 µm to 350 µm, wherein the second polymer textile of the innermost layer is a fleece, having a basis weight of 50 g/m² to 250 g/m² and a thickness of 150 µm to 600 µm. Further, a first portion of the adhesive layer is in contact with at least one of the plurality of cables and a second portion of the adhesive layer is in contact with the outermost layer.

Additional features and advantages will be set forth in the detailed description which follows, and will be readily apparent to those skilled in the art from that description or recognized by practicing the embodiments as described herein, including the detailed description which follows, the claims, as well as the appended drawings.

It is to be understood that both the foregoing general description and the following detailed description describe various embodiments and are intended to provide an overview or framework to understanding the nature and character of the claimed subject matter.

The accompanying drawings are included to provide a further understanding of the various embodiments, and are incorporated into and constitute a part of this specification. The drawings illustrate the various embodiments described herein, and together with the description serve to explain the principles and operation of the claimed subject matter.

### BRIEF DESCRIPTION OF THE DRAWINGS

The following is a description of the figures in the accompanying drawings. The figures are not necessarily to scale, and certain features and certain views of the figures may be shown exaggerated in scale or in schematic in the interest of clarity and conciseness.

In the drawings:
FIG. 1 is a schematic cross-sectional view of a wrap for bundling cable, according to an embodiment of the disclosure.
FIG. 2 is a schematic cross-sectional view of a wrap for bundling cable, according to another embodiment of the disclosure
FIG. 3 is a schematic cross-sectional view of a bundled cable, according to a further embodiment of the disclosure.

The foregoing summary, as well as the following detailed description of certain inventive techniques, will be better understood when read in conjunction with the figures. It should be understood that the claims are not limited to the arrangements and instrumentality shown in the figures. Furthermore, the appearance shown in the figures is one of many ornamental appearances that can be employed to achieve the stated functions of the apparatus.

### DETAILED DESCRIPTION OF THE PREFERRED EMBODIMENTS

Additional features and advantages will be set forth in the detailed description which follows and will be apparent to those skilled in the art from the description, or recognized by practicing the embodiments as described in the following description, together with the claims and appended drawings.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

In this document, relational terms, such as first and second, top and bottom, and the like, are used solely to distinguish one entity or action from another entity or action, without necessarily requiring or implying any actual such relationship or order between such entities or actions.

Modifications of the disclosure will occur to those skilled in the art and to those who make or use the disclosure. Therefore, it is understood that the embodiments shown in the drawings and described above are merely for illustrative purposes and not intended to limit the scope of the disclosure, which is defined by the following claims, as interpreted according to the principles of patent law, including the doctrine of equivalents.

For purposes of this disclosure, the term "coupled" (in all of its forms: couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature, or may be removable or releasable in nature, unless otherwise stated.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other, such as within about 5% of each other, or within about 2% of each other.

Directional terms as used herein-for example up, down, right, left, front, back, top, bottom-are made only with reference to the figures as drawn and are not intended to imply absolute orientation.

As used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

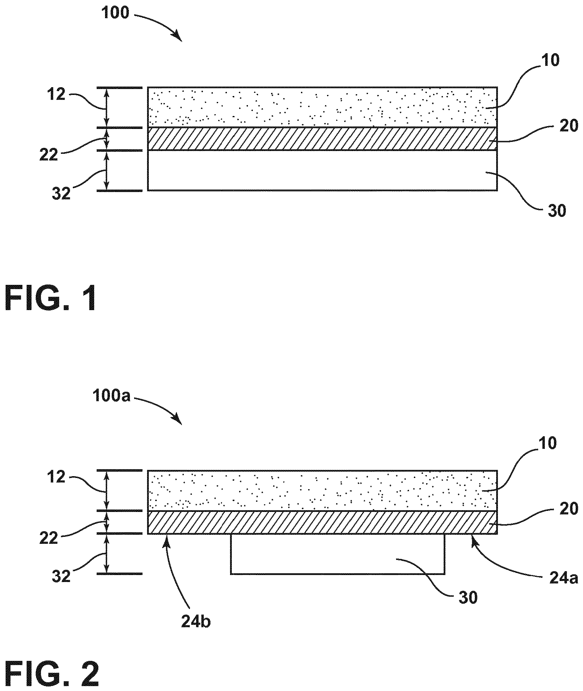

Referring to the drawings in general and to FIG. 1 in particular, it will be understood that the illustrations are for the purpose of describing particular embodiments and are not intended to limit the disclosure appended claims thereto. The drawings are not necessarily to scale, and certain features and certain views of the drawings may be shown exaggerated in scale or in schematic form in the interest of clarity and conciseness.

Described in this disclosure are wrap for bundling of cable and bundled cable that comprise a multilayer wrap with an outermost layer, an innermost layer and an adhesive layer between the innermost and outermost layers. Further, the wrap and bundled cable can be characterized by a combination of abrasion resistance and damping resistance. In addition, the multilayer wrap of these wrap and bundled cable aspects can comprise an abrasion resistance that exceeds an abrasion resistance of the innermost and outermost layers alone.

There are various advantages associated with the wrap for bundled cable aspects and the bundled cable aspects of the disclosure. Foremost, embodiments of these wrap and bundled cables can possess a superior combination of abrasion resistance and sound damping characteristics. Accordingly, these wrap and bundled cables can be employed in industrial applications requiring such a combination of properties. These applications include, but are not limited to, automobile applications in proximity to the engine compartment and passenger compartment, such as wire and electrical connections in proximity to the firewall that separates these compartments. In some cases, these wrap and bundled cables can be employed in applications requiring at least Class B sound damping under the LV 312 Standard, and Class D abrasion resistance under the ISO 6722 and LV 312 Standards.

Another advantage of these wrap and bundled cables is that their superior combination of abrasion resistance and damping properties allows their use across a wide array of application environments. As a result, these wrap and bundled cable can be employed by an assembler without the need to select between different types of wrap and bundled cable, depending upon the particular abrasion resistance and/or damping requirements of a given application. Accordingly, manufacturing-related costs can be reduced through the use of the wrap and bundled cable of the disclosure.

Referring now to FIG. 1, a wrap 100 for bundling cable is provided. The wrap 100 depicted in exemplary form in FIG. 1 is a multilayer wrap that comprises: (a) an outermost layer 10 comprising a first polymer textile; (b) an innermost layer 30 comprising a second polymer textile; and (c) an adhesive layer 20 between the outermost and innermost layers 10, 30. As depicted in FIG. 1, the innermost layer 10 has a thickness 12, the outermost layer 30 has a thickness 32 and the adhesive layer 20 has a thickness 22. Further, the first and second textiles differ from one another. In addition, the multilayer wrap 100 comprises an abrasion resistance that exceeds an abrasion resistance of the innermost and outermost layers 10, 30 alone, as measured under the ISO 6722 Standard. In addition, the multilayer wrap 100 comprises a damping resistance of at least class B, as measured under the LV 312 Standard.

Referring again to FIG. 1, the polymer textiles of the outermost and innermost layers 10, 30 of the multilayer wrap 100 can, according to some embodiments, comprise one or more of a cloth, a velour, a fleece and a non-woven. Accordingly, the polymer textiles employed by the multilayer wrap 100 can comprise various fabrics, weaves and non-woven arrangements of their fiber and associated materials. Further, each of the polymer textiles can be fabricated from polyethylene terephthalate (PET), polyester, polyolefin, polyamide, and combinations of these materials. In certain implementations of the multilayer wrap 100 depicted in FIG. 1, the polymer textiles of one or both of the outermost and innermost layers 10, 30 can further comprise additional fillers, reinforcements, and the like such as glass fibers, carbon fibers or other high elastic modulus polymeric fibers.

According to an implementation of the wrap 100, the polymer textile of the outermost layer 10 is a cloth. Further, the polymer textile of the outermost layer 10 can be fabricated from a PET material, a polyester material, a polyamide material and combinations of these materials. According to another implementation of the wrap 100, the polymer textile of the innermost layer 30 is a fleece. Further, the polymer textile of the innermost layer 30 can, in some embodiments, be fabricated from a polyamide material.

Referring again to the multilayer wrap 100 depicted in FIG. 1, the polymer textiles employed for the outermost and innermost layers 10, 30 differ from one another. Without being bound by theory, this configuration is believed to influence the combination of high abrasion resistance and sound damping afforded to the wrap 100. Further, the abrasion resistance of the wrap 100 tends to exceed the abrasion resistance of each of the outermost and innermost layers 10, 30, as measured on an individual basis.

According to some embodiments, the polymer textiles employed for the outermost and innermost layers 10, 30 of the wrap 100 (see FIG. 1) are configured to have certain densities (also referred to herein as "basis weight"). The outermost layer 10 has a basis weight from about 100 g/m² to about 400 g/m². The innermost layer 30 has a basis weight from about 50 g/m² to about 250 g/m².

According to an implementation of the wrap 100 (see FIG. 1), the thickness 12 of the outermost layer 10 ranges from about 150 µm to about 350 µm. According to another implementation of the wrap 100, the thickness 32 of the innermost layer 30 ranges from about 150 µm to about 600 µm.

Referring to FIG. 1, the adhesive layer 20 of the multilayer wrap 100 can comprise any of various viscoelastic adhesive compositions as understood by those of ordinary skill in the field of the disclosure. According to some embodiments, the adhesive layer 20 includes an acrylate-based adhesive, a polyacrylate-based adhesive, a silicone-based adhesive, a synthetic rubber-based adhesive, a natural rubber-based adhesive or a combination of these adhesives. Further, embodiments of the adhesive layer 20 can incorporate one or more backing layers on either or both sides of the adhesive. These backing layers can be fabricated from one or more polymeric materials including polyvinyl chloride (PVC), polyethylene, polypropylene, and polyester. In a preferred embodiment, the adhesive layer 20 includes an acrylate-based adhesive.

Referring again to the multilayer wrap 100 depicted in FIG. 1, the thickness 22 of the adhesive layer can range from about 50 µm to about 1000 µm, from about 50 µm to about 900 µm, from about 50 µm to about 800 µm, from about 50 µm to about 700 µm, from about 50 µm to about 600 µm, from about 50 µm to about 500 µm, from about 100 µm to about 1000 µm, from about 100 µm to about 900 µm, from about 100 µm to about 800 µm, from about 100 µm to about 700 µm, from about 100 µm to about 600 µm, from about 100 µm to about 500 µm, from about 150 µm to about 1000 µm, from about 150 µm to about 900 µm, from about 150 µm to about 800 µm, from about 150 µm to about 700 µm, from about 150 µm to about 600 µm, from about 150 µm to about 500 µm, from about 150 µm to about 450 µm, from about 150 µm to about 400 µm, from about 150 µm to about 350 µm, from about 150 µm to about 300 µm, and all thickness values between these thickness range endpoints.

According to some embodiments, the multilayer wrap 100 can be characterized by an abrasion resistance of at least 1000 abrasion strokes according to the LV 312 Standard, "Adhesive tapes for cable sets in motor vehicles" (January 2005), employed by various automakers (e.g., Audi, BMW, Volkswagen, etc.) ("LV 312 Standard"), and as measured by the ISO 6722 Standard. According to an embodiment, the multilayer wrap 100 can be characterized by an abrasion resistance of Class D (1000-4999 abrasion strokes), Class E (5000-14999 abrasion strokes), Class F (15000-29999 abrasion strokes) or even Class G (2: 30000 abrasion strokes), according to the LV 312 Standard, and as measured by the ISO 6722 Standard. In some implementations, the multilayer wrap 100 can exhibit an abrasion resistance of at least 1000 abrasion strokes, at least 2000 abrasion strokes, at least 3000 abrasion strokes, at least 4000 abrasion strokes, at least 5000 abrasion strokes, at least 7500 abrasion strokes, at least 10000 abrasion strokes, at least 20000 abrasion strokes, at least 30000 abrasion strokes, at least 40000 abrasion strokes, at least 50000 abrasion strokes, and even higher levels of abrasion resistance, according to the LV 312 Standard and as measured by the ISO 6722 Standard.

In some implementations of the multilayer wrap 100 depicted in FIG. 1, the wrap is characterized by a sound damping of at least 2 dB according to the LV 312 Standard. Further, in some aspects, the sound damping of the multilayer wrap 100 can be characterized as being in Class B, Class C, Class D, and even Class E, according to the LV 312 Standards. According to embodiments of the disclosure, the multilayer wrap 100 is characterized by a sound damping of at least 2 dB, of at least 3 dB, of at least 4 dB, of at least 5 dB, of at least 10 dB, of at least 15 dB, of at least 20 dB, of at least 25 dB, of at least 30 dB, of at least 35 dB, of at least 40 dB, of at least 45 dB, of at least 50 dB, and all levels of damping between these lower thresholds, as measured according to the LV 312 Standard.

As noted earlier, the multilayer wrap 100 depicted in FIG. 1 can be characterized by a combination of both good abrasion resistance and sound damping properties. Accordingly, embodiments of the multilayer wrap 100 depicted in FIG. 1 can exhibit an abrasion resistance of 1000 abrasion strokes and sound damping of at least 2 dB, as measured according to the LV 312 Standard. In some aspects, embodiments of the multilayer wrap 100 can exhibit an abrasion resistance of Class D, Class E, Class F, or Class G while maintaining a sound damping of at least 2 dB, as measured under the LV 312 Standard. In another aspect of the disclosure, embodiments of the multilayer wrap 100 can exhibit an abrasion resistance of Class D, Class E, Class F, or Class G while maintaining a sound damping of at least 10 dB, as measured under the LV 312 Standard.

As used herein, "abrasion resistance" is measured according to the ISO 6722 Standard and classified under the LV 312 Standard. In particular, abrasion is tested according to the ISO 6722 Standard by scraping a mandrel with a diameter of 5 mm across a multilayer tape sample until failure of the sample. Each scrape back and forth is defined as a stroke and can be grouped according to various Classes (e.g., Class A, Class B, etc.), according to the LV 312 Standard. Further, unless otherwise noted, all abrasion resistance values reported in the disclosure refer to an average number of abrasion strokes before failure for a particular sample configuration.

As also used herein, "sound damping" is measured according to the LV 312 Standard, and referenced in that standard as "acoustic insulation" or "noise attenuation". Unless otherwise noted, all sound damping values reported in the disclosure are given in units of decibels "dB" and refer to an average dB difference between a test rod with no covering and the same test rod covered with the sample.

Referring now to FIG. 2, an exemplary multilayer wrap 100a for bundling cable is provided. Unless otherwise noted, the multilayer wrap 100a depicted in FIG. 2 is similar to the wrap 100 depicted in FIG. 1. As such, like-numbered elements in each of the figures have the same or substantially similar structure and function and the multilayer wrap 100a exhibits the same abrasion resistance and sound damping properties as the multilayer wrap 100 (see FIG. 1). The wrap 100a depicted in exemplary form in FIG. 2 is a multilayer wrap that comprises: (a) an outermost layer 10 comprising a first polymer textile; (b) an innermost layer 30 comprising a second polymer textile; and (c) an adhesive layer 20 between the outermost and innermost layers 10, 30. As depicted in FIG. 2, the innermost layer 10 has a thickness 12, the outermost layer 30 has a thickness 32 and the adhesive layer 20 has a thickness 22. Further, the first and second textiles differ from one another. In addition, the multilayer wrap 100a comprises an abrasion resistance that exceeds an abrasion resistance of the innermost and outermost layers 10, 30 alone, as measured under the ISO 6722 Standard. In addition, the multilayer wrap 100a comprises a damping resistance of at least class B, as measured under the LV 312 Standard.

Referring again to FIG. 2, the multilayer wrap 100a for bundling of cable is further configured for longitudinal bundling of cable. As such, the multilayer wrap 100a can be employed to bundle or wrap cable in a longitudinal fashion, without the need for a spiral wrapping methodology. More particularly, a first portion 24a and a second portion 24b of the adhesive layer 20 are in contact with the innermost layer 30. Further, the first and second portions 24a, 24b of the adhesive layer 20 are exposed adjacent to the outermost layer 10. As such, the first and second portions 24a, 24b of the adhesive layer 20 are not covered or otherwise in contact with the outermost layer 10. In embodiments of the multilayer wrap 100a, the wrap 100a can be longitudinally wrapped around cable, wire or the like such that the innermost layer 10 is in substantial contact with the cable, wire or the like and the first and second portions 24a, 24b secure the wrap 100a around the cable, wire or the like. According to some implementations of the wrap 100a, the lengths of the first and second portions 24a, 24b are substantially the same or, in other aspects, differ from one another. In other embodiments of the wrap 100a, the wrap 100a includes a single exposed portion of the adhesive layer 20 (e.g., 24a or 24b as shown in FIG. 2) or more than two exposed portions of the adhesive layer 20 (not shown).

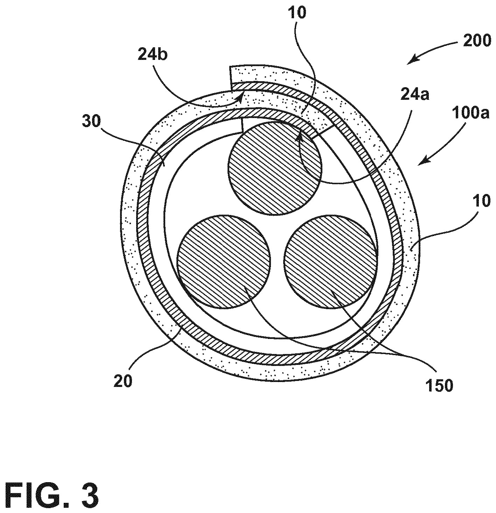

Referring now to FIG. 3, a bundled cable 200 is provided that includes a multilayer wrap 100a (see also FIG. 2) and a plurality of cables 150. Unless otherwise noted, the multilayer wrap 100a depicted in FIG. 3 is the same as the wrap 100a depicted in FIG. 2. As such, like-numbered elements in each of the figures have the same or substantially similar structure and function and the multilayer wrap 100a in FIG. 3 exhibits the same abrasion resistance and sound damping properties as the multilayer wrap 100a shown in FIG. 2. Further, embodiments of the bundled cable 200 are configured such that the first and second portions 24a, 24b of the adhesive layer 20 of the wrap 100a are configured such that the second portion 24b is longer than the first portion 24a. Referring again to the bundled cable 200, the multilayer wrap 100a is arranged to bundle the plurality of cables 150. In particular, the first portion 24a of the adhesive layer 20 is in contact with one or more of the plurality of cables 150 (e.g., to adhere the adhesive layer 20 to the cables 150). Further, the second portion 24b of the adhesive layer 20 of the wrap 100a is wrapped around the plurality of cables 150 and attached to a portion of the outermost layer 10 (e.g., to adhere the adhesive layer 20 to the outermost layer 10, thus securing the cables 150 within the wrap 100a). As shown in FIG. 3, embodiments of the bundled cable 200 are configured such that the second portion 24b of the adhesive layer 20 of the wrap 100a is placed in contact with a portion of the outermost layer 10 that resides above the first portion 24a of the adhesive layer. According to other implementations of the bundled cable 200 (not shown), the second portion 24b is adhered to another portion of the outermost layer 10 that does not reside above the first portion 24a of the adhesive layer 20. As would be understood by those with ordinary skill in the field of the disclosure, other configurations of the bundled cable 200 are envisioned that are consistent with concepts elucidated above and shown in exemplary form in FIG. 3.

### EXAMPLES

The following examples describe various features and advantages provided by the disclosure, and are in no way intended to limit the invention and appended claims.

### Example 1

In this example, various configurations of wrap for bundling of cable, according to aspects of the disclosure and consistent with the multilayer wrap 100 (see FIG. 1), have been prepared. As listed in Tables 1 A and 1B, the "outermost layer" corresponds to an outermost layer of the wrap (e.g., as consistent with the outermost layer 10) and the "innermost layer" corresponds to an innermost layer (e.g., as consistent with the innermost layer 30) of the wrap. Further, the "PET" is a PET cloth; the "210 µm fleece" is a fleece layer having a thickness of 210 µm and a polyester composition; the "540 µm fleece" is a fleece layer having a thickness of 540 µm and a polyester composition; the "velour" is a velour textile having a polyamide composition; and "polyamide" is a polyamide cloth. Each of the combinations, designated as Sample IDs "A" through "I", was laminated together by placing an acrylate adhesive on the designated "outermost layer" and pressing the outermost layer with adhesive onto the "innermost layer".

As noted in Tables 1A and 1B, the "outermost layer" (e.g., as comparable to the outermost layer 10 shown in FIG. 1) of the multilayer wrap configurations is PET tape, 210 µm thick fleece, 540 µm thick fleece, velour or polyamide. As also noted in Tables 1A and 1B, the "innermost layer" (e.g., as comparable to the innermost layer 30 shown in FIG. 1) of the multilayer wrap configurations is PET cloth, 210 µm thick fleece, 540 µm thick fleece, velour or polyamide. In addition, each of the multilayer wrap configurations listed in Tables 1A and 1B included an acrylate adhesive (e.g., as comparable to the adhesive layer 20 shown in FIG. 1).

**TABLE 1 A - Abrasion Results**

| **Sample ID** | **Outermost layer** | **Innermost Layer** | **Abrasion (strokes)** | | | **Avg. (strokes)** | **Class** | **Theor. Abrasion (strokes)** | **Theor. Abrasion Class** |
|---|---|---|---|---|---|---|---|---|---|
| A | PET | 210µm fleece | 2311 | 2463 | 2602 | **2459** | D | 1422 | D |
| B | PET | 540µm fleece | 5162 | 6153 | 4978 | **5431** | E | 1949 | D |
| C | PET | Velour | 11520 | 17841 | 13390 | **14250** | E | 4634 | D |
| D | Polyamide | PET | 44145 | 46478 | 38728 | **43117** | G | 21164 | F |
| E | Velour | 210µm fleece | 6886 | 7825 | 9333 | **8015** | E | 3328 | D |
| F | Polyamide | 210µm fleece | 21860 | 22537 | 18531 | **20976** | F | 19858 | F |
| G | Velour | 540µm fleece | 11113 | 10159 | 8696 | **9989** | E | 3855 | D |
| H | Polyamide | 540µm fleece | 23532 | 17441 | 22445 | **21139** | F | 20385 | F |
| I | Polyamide | Velour | 43832 | 55725 | 52596 | **50718** | G | 23070 | F |

**TABLE 1B - Damping Results**

| **Sample ID** | **Outermost layer** | **Innermost Layer** | **Damping (dB)** | | | **Avg (dB)** | **Damping Class** |
|---|---|---|---|---|---|---|---|
| A | PET | 210µm fleece | 8.1 | 6.6 | 9.6 | **8.1** | C |
| B | PET | 540µm fleece | 12.4 | 11.5 | 11.3 | **11.7** | D |
| C | PET | Velour | 20.7 | 20.2 | 20.2 | **20.4** | E |
| D | Polyamide | PET | 2.8 | 3.2 | 2 | **2.7** | B |
| E | Velour | 210µm fleece | 20.6 | 18.4 | 18.3 | **19.1** | E |
| F | Polyamide | 210µm fleece | 6.9 | 5.8 | 5.3 | **6** | C |
| G | Velour | 540µm fleece | 19.4 | 17.5 | 17.3 | **18.1** | E |
| H | Polyamide | 540µm fleece | 13.2 | 12.7 | 12.7 | **12.9** | D |
| I | Polyamide | Velour | 20.7 | 20.2 | 20.3 | **20.4** | E |

As is evident from Tables 1 A and 1 B, each of the tested multilayer wrap combinations exhibits a combination of both abrasion resistance and sound damping. In particular, Table 1 A lists the abrasion results and Table 1 B lists the damping results associated with the samples of this example. In Table 1 A, the abrasion testing was measured according to the ISO 6722 and LV 312 Standards, and the number of abrasion strokes is reported from the testing of each of three samples from each Sample ID configuration. Further, an average number of abrasion strokes from each Sample ID configuration is reported, along with resulting abrasion class according to the LV 312 Standard. In addition, a theoretical number of abrasion strokes and abrasion class is reported for each Sample ID configuration, as calculated based on the summation of the reported abrasion strokes associated with each individual layer of a given Sample ID configuration. As for Table 1 B, the damping testing was measured according to the LV 312 Standard, and the damping in decibels (dB) is reported from the testing of each of three samples from each Sample ID configuration. Further, an average damping from each Sample ID configuration is reported, along with the damping class according to the LV 312 Standard,

Referring to Table 1 A, it is evident from the data in the table that each tested multilayer wrap configuration exhibited average abrasion resistance levels as measured under the ISO 6722 and LV 312 Standards in excess of the theoretical abrasion resistance level for that configuration. That is, each of the combinations demonstrated superior abrasion resistance than what would otherwise be expected by summing the abrasion resistance levels exhibited by their respective individual layers. Further, certain multilayer wrap configurations employing PET tape, polyamide or velour as the outermost layer with fleece or velour as the innermost layer (i.e., Sample IDs C, G, H and I) demonstrate relatively high average abrasion resistance levels in excess of 10000 strokes.

Referring to Table 1 B, it is evident from the data in the table that each tested multilayer wrap configuration exhibited an average damping of at least about 3 dB with a damping class of B or greater, as measured under the LV 312 Standard. Further, certain multilayer wrap configurations employing PET tape, polyamide or velour as the outermost layer with fleece or velour as the innermost layer (i.e., Sample IDs C, E, G, H and I) demonstrate relatively high damping levels in excess of about 13 dB.

As is also evident from Tables 1 A and 1B, each of the multilayer wrap combinations was measured with an abrasion resistance of 1000 abrasion strokes and sound damping of at least 2 dB, as measured according to the LV 312 and ISO 6722 Standards. Further, it is evident from Tables 1 A and 1 B that the combinations of PET tape/velour, velour/540 µm fleece and polyamide/velour (i.e., Sample IDs C, G and I) result in a particularly advantageous combination of abrasion resistance and sound damping. That is, these combinations were measured with an abrasion resistance of at least 10000 abrasion strokes and a sound damping of at least 18 dB, as measured according to the LV 312 and ISO 6722 Standards.

According to a further aspect, the multilayer wrap comprises an abrasion resistance of at least 1000 strokes and a damping resistance of at least 2 dB of attenuation, as measured under the ISO 6722 and LV 312 Standards.

According to a further aspect, a wrap for bundling cable is provided, wherein a portion of the adhesive layer is in contact with the innermost layer and exposed adjacent to the outermost layer, and further wherein the wrap is configured for longitudinal bundling of cable.

According to a further aspect, a bundled cable is provided. The bundle cable comprises a plurality of cables; and a multilayer wrap arranged to bundle the plurality of cables.

## Claims

1. A wrap for bundling cable, comprising:
a multilayer wrap that comprises:
(a) an outermost layer comprising a first polymer textile;
(b) an innermost layer comprising a second polymer textile; and
(c) a single adhesive layer between the outermost and innermost layers,
wherein the first and second textiles differ from one another,
wherein the multilayer wrap comprises an abrasion resistance that exceeds an abrasion resistance of the innermost and outermost layers alone, as measured under the ISO 6722 Standard, and
further wherein the multilayer wrap comprises a damping resistance of at least class B, as measured under the LV 312 Standard
wherein the first polymer textile of the outermost layer is a cloth comprising polyethylene terephthalate (PET), polyester, polyamide or a combination thereof, having a basis weight of 100 g/m² to 400 g/m² and a thickness of 150 µm to 350 µm,
wherein the second polymer textile of the innermost layer is a fleece, having a basis weight of 50 g/m² to 250 g/m² and a thickness of 150 µm to 600 µm.

2. The wrap according to claim 1, wherein the multilayer wrap comprises an abrasion resistance of at least 1000 strokes and a damping resistance of at least 2 dB of attenuation, as measured under the ISO 6722 and LV 312 Standards.

3. A wrap according to one of the preceding claims,
wherein a portion of the adhesive layer is in contact with the innermost layer and exposed adjacent to the outermost layer, and
further wherein the wrap is configured for longitudinal bundling of cable.

4. A bundled cable, comprising:
a plurality of cables; and
a multilayer wrap according to one of the preceding claims arranged to bundle the plurality of cables.

## Patentansprüche

1. Hülle zum Bündeln von Kabeln, umfassend:
eine mehrschichtige Hülle, die umfasst:
(a) eine äußerste Schicht, die ein erstes Polymertextil umfasst;
(b) eine innerste Schicht, die ein zweites Polymertextil umfasst; und
(c) eine einzelne Klebstoffschicht zwischen der äußersten Schicht und der innersten Schicht,
wobei das erste Textil und das zweite Textil sich voneinander unterscheiden,
wobei die mehrschichtige Hülle eine Abriebfestigkeit aufweist, die eine Abriebfestigkeit der innersten und der äußersten Schicht allein übersteigt, gemessen gemäß dem Standard ISO 6722, und
wobei zudem die mehrschichtige Hülle einen Dämpfungswiderstand von mindestens der Klasse B aufweist, gemessen gemäß dem Standard LV 312,
wobei das erste Polymertextil der äußersten Schicht ein Tuch ist, das Polyethylenterephthalat (PET), Polyester, Polyamid oder eine Kombination davon umfasst und ein Flächengewicht von 100 g/m² bis 400 g/m² und eine Dicke von 150 µm bis 350 µm hat,
wobei das zweite Polymertextil der innersten Schicht ein Vlies ist, das ein Flächengewicht von 50 g/m² bis 250 g/m² und eine Dicke von 150 µm bis 600 µm hat.

2. Hülle nach Anspruch 1, wobei die mehrschichtige Hülle eine Abriebfestigkeit von mindestens 1000 Hüben und einen Dämpfungswiderstand von mindestens 2 dB Abschwächung aufweist, gemessen gemäß den Standards ISO 6722 und LV 312.

3. Hülle nach einem der vorhergehenden Ansprüche,
wobei ein Anteil der Klebstoffschicht in Kontakt mit der innersten Schicht ist und benachbart zu der äußersten Schicht exponiert ist, und
wobei die Hülle des Weiteren zur längsgerichteten Bündelung von Kabel ausgestaltet ist.

4. Gebündeltes Kabel, umfassend:
eine Vielzahl von Kabeln; und
eine mehrschichtige Hülle nach einem der vorhergehenden Ansprüche,, die angeordnet ist, um die Vielzahl von Kabeln zu bündeln.

## Revendications

1. Enveloppe pour la mise en faisceau de câbles, comprenant :
une enveloppe multicouche qui comprend :
(a) une couche la plus à l'extérieur comprenant un premier textile de polymère ;
(b) une couche la plus à l'intérieur comprenant un deuxième textile de polymère ; et
(c) une seule couche d'adhésif entre les couches la plus à l'extérieur et la plus à l'intérieur,
le premier et le deuxième textiles étant différents l'un de l'autre,
l'enveloppe multicouche comprenant une résistance à l'abrasion qui dépasse une résistance à l'abrasion des couches la plus à l'intérieur et la plus à l'extérieur seules, comme mesurée selon la norme ISO 6722, et
en outre l'enveloppe multicouche comprenant une résistance d'amortissement d'au moins classe B, comme mesurée selon la norme LV 312,
le premier textile de polymère de la couche la plus à l'extérieur étant une toile comprenant du poly(téréphtalate d'éthylène) (PET), du polyester, du polyamide ou une combinaison correspondante, ayant un grammage de 100 g/m² à 400 g/m² et une épaisseur de 150 µm à 350 µm,
le deuxième textile de polymère de la couche la plus à l'intérieur étant un voile, ayant un grammage de 50 g/m² à 250 g/m² et une épaisseur de 150 µm à 600 µm.

2. Enveloppe selon la revendication 1, l'enveloppe multicouche comprenant une résistance à l'abrasion d'au moins 1000 strokes et une résistance d'amortissement d'au moins 2 dB d'atténuation, comme mesurées selon les normes ISO 6722 et LV 312.

3. Enveloppe selon l'une des revendications précédentes,
une partie de la couche d'adhésif étant en contact avec la couche la plus à l'intérieur et exposée adjacente à la couche la plus à l'extérieur, et
en outre l'enveloppe étant configurée pour une mise en faisceau longitudinale de câbles.

4. Câble mis en faisceau, comprenant :
une pluralité de câbles ; et
une enveloppe multicouche selon l'une des revendications précédentes, agencée pour mettre en faisceau la pluralité de câbles.
